Europäisches Patentamt

European Patent Office

Office européen des brevets

(11) Publication number: **0 448 040 A2**

## EUROPEAN PATENT APPLICATION

(21) Application number: 91104238.0

(22) Date of filing: **19.03.91**

(51) Int. Cl.⁵: **H01M 4/00**, H01M 10/34, C25D 11/02

(30) Priority: **19.03.90 JP 68880/90**

(43) Date of publication of application:
**25.09.91 Bulletin 91/39**

(84) Designated Contracting States:
**DE FR GB**

(71) Applicant: **FURUKAWA DENCHI KABUSHIKI KAISHA**
**4-1, Hoshikawa 2-chome, Hodogaya-ku**
**Yokohama-shi, Kanagawa-ken(JP)**

(72) Inventor: **Wakao, Shinjiro**
**5-8-101, Takamori**
**Isehara-shi, Kanagawa-ken(JP)**

(74) Representative: **Schmidt-Evers, Jürgen,**
**Dipl.-Ing. et al**
**Patentanwälte Mitscherlich, Gunschmann**
**Dr. Körber, Schmidt-Evers, Melzer, Dr. Schulz**
**Steinsdorfstrasse 10**
**W-8000 München 22(DE)**

(54) Manufacturing method of hydrogenocclusion alloy electrode.

(57) A manufacturing method of a hydrogen-occlusion alloy electrode characterized by that prior to being subjected to an initial activation treatment a hydrogen-occlusion alloy electrode is subjected to an anodic oxidation treatment in an alkaline aqueous solution. As a result, when the hydrogen-occlusion alloy electrode already given the anodic oxidation treatment is given the initial activation treatment for achieving the initial activation thereof, the number of charge-discharge cycles required for the initial activation thereof can be decreased as compared with a hydrogen-occlusion electrode given no anodic oxidation treatment.

This invention relates to a manufacturing method of a hydrogen-occlusion alloy electrode which is capable of electrochemically occluding and releasing hydrogen and used as a negative electrode of a secondary cell or battery.

Secondary cells or batteries well known hitherto include a nickel-cadmium battery, a lead acid battery and the like. However, they have a common drawback that the energy density per unit weight or unit volume is comparatively low. For this reason, there has been proposed a nickel-hydrogen battery or cell in which a hydrogen-occlusion alloy capable of electrochemically occluding and releasing a large quantity of hydrogen is used as a negative electrode, a nickel oxide is used as a positive electrode and an alkaline aqueous solution is used as an electrolyte, thus having a higher energy density. The negative electrode used herein is a hydrogen-occlusion alloy such as $LaNi_5$ or the like.

It, however, is very difficult for the above-mentioned hydrogen-occlusion alloy to electrochemically occlude hydrogen in a sufficient amount under the atmospheric pressure, because its hydrogen dissociation pressure at the room temperature becomes more than 2 atms., and in addition, its service life in terms of repeated charge-discharge cycles is very short or only about 30 cycles or so. In view of the foregoing, there have been further made such proposals that a portion of Ni component in the $LaNi_5$ alloy should be substituted by such an element as Co or Al or the like in order to have the alloy made of a greater variety of elements and that a Laves-phase $AB_2$ type alloy such as a Zr-V-Ni system or the like should be used for the negative electrode.

Those proposed hydrogen-occlusion alloys have been found capable of electrochemically occluding hydrogen sufficiently at the room temperature and their service lives in terms of repeated charge-discharge cycles have been found comparatively long, and such improved effects have been achieved as compared with the foregoing earlier counterparts. However, they have such a defect that, when they are used as the negative element of a cell or battery, a large number of repeated charge-discharge cycles operation must be applied to them for the initial activation treatment thereof, that is, in order that they may become capable of providing a stable, high-capacity performance.

It is, therefore, an object of the present invention to remove the foregoing problems and make it possible to achieve the initial activation of a hydrogen-occlusion alloy electrode by fewer cycles of charge-discharge operation and thus an aspect of the present invention is characterized in that a hydrogen-occlusion alloy electrode is given an anodic oxidation treatment in an alkaline aqueous solution and thereafter the initial activation treatment is applied to the hydrogen-occlusion alloy electrode.

Embodying examples of the present invention will now be explained in detail as follows:
Commercially available powdered zirconium, vanadium and nickel were weigthed and mixed in a predetermined composition ratio, for instance, $ZrV_{0.8}Ni_{1.6}$,' and this mixture was heated and molten by means of an arc melting process so as to obtain a hydrogen-occlusion alloy. This alloy was then pulverized into coarse grains, and then heated at 900°C in a vacuum heating device. After introducing hydrogen of one atm. into the vacuum heating device, the alloy was cooled down to room temperature to carry out hydrogenation and activation thereof. The hydrogenated alloy thus obtained was again pulverized into fine powder of less than 400 mesh. The fine powder of the hydrogen-occlusion alloy thus obtained was formed under 5 t/cm² pressure into circular pellets, each measuring 1 cm in diameter, and the pellets were then sintered at 900°C in vacuum condition. A lead wire was then attached thereto to obtain a hydrogen-occlusion alloy electrode. The hydrogen-occlusion alloy powder in the electrode was approximately 1 gram in weight.

Using as a working pole each of these hydrogen-occlusion alloy electrodes made as above in combination with a nickel electrode serving as a counter pole and 30 wt % water solution of potassium hydroxide as the alkaline electrolyte, open type test cells were prepared. In this arrangement, after an anodic oxidation treatment of the hydrogen-occlusion electrode was given to each cell under various conditions, the capacity (the first-cycle discharge capacity) capable of obtaining from each cell by the first charge-discharge cycle operation and the number of charge-discharge cycles (the number of cycles for the initial activation) required for each cell to become capable of providing a predetermined high capacity stably were determined. The results thereof are shown in Table 1.

For the anodic oxidation treatment condition of the hydrogen-occlusion alloy electrode, the electric potential vs. Hg/HgO and the treatment time were varied as shown in Table 1. Further, for the charge-discharge operation, each cell was charged with electric current having current density of 6 mA/cm² to become 130% of electrochemical hydrogen occlusion quantity of the hydrogen-occlusion alloy electrode, and then discharged with electric current having a current density of 10 mA/cm² until the voltage of the hydrogen-occlusion alloy electrode was dropped to - 0.75 V vs. Hg/HgO.

2

TABLE 1

| CELL NO. | ANODIC OXIDATION TREATMENT CONDITION | | FIRST-CYCLE DISCHARGE CAPACITY (mAG/g) | *1 |
|---|---|---|---|---|
| | Electric Potential (V) (vs. Hg/HgO at 25 °C) | Treatment time (min.) | | |
| 1 | - 0.6 | 3 | 60 | 4 |
| 2 | - 0.6 | 20 | 250 | 2 |
| 3 | - 0.6 | 40 | 280 | 1 |
| 4 | - 0.6 | 120 | 270 | 2 |
| 5 | - 0.6 | 180 | 260 | 2 |
| 6 | - 0.5 | 3 | 200 | 2 |
| 7 | - 0.5 | 20 | 280 | 1 |
| 8 | - 0.4 | 3 | 280 | 1 |
| 9 | No anodic oxidation treatment | — | 15 | 6 |

Note: *1 represents the column for the number of cycles for the initial activation which means the number of charge-discharge cycles required for the cell to become capable of providing the high capacity of 280 mAh/g stably.

Also in the case of the test cell No. 9 given no anodic oxidation treatment as shown for comparison, the charge-discharge cycle operation was carried out in the same manner as the other test cells.

As is clear from Table 1, the electrodes given the anodic oxidation treatment according to the present invention show a remarkably increased first-cycle discharge capacity and the number of charge-discharge cycles required for their initial activation is in the range of 1 to 4 cycles or fewer as compared with 6 cycles for the electrode given no anodic oxidation treatment.

The reason for such advantage effects caused by giving the anodic oxidation treatment to the electrode according to the present invention is not clarified yet, but it is assumed that the hydrogen-occlusion alloy electrode given anodic oxidation treatment in the alkaline aqueous solution has a condensed phase of nickel formed on the surface layer of the alloy, thus facilitating the initial activation of the electrode, that is, decreasing the number of charge-discharge cycles for the initial activation thereof.

In these embodying examples, generally, the higher the anodic oxidation potential is, the greater the advantageous effects even with a shorter treatment time. This is due to the fact that the oxidation speed is greater with a higher anodic oxidation potential. The same effects can be obtained by setting the treatment temperature higher. However, when treated excessively, the electrode becomes oxidized too much, resulting in decreasing the effects. Preferable potentials vary with compositions of hydrogen-occlusion alloys. In the case of the alloy of Zr-V-Ni system shown in the embodying examples of the present invention, the potentials in the range of - 0.6 to - 0.4 vs. Hg/HgO are considered preferable, and those in the range of - 0.9 to - 0.7 vs. Hg/HgO are preferable for a Mm-Ni system alloy, because the Mm-Ni system alloy is easier to oxidize.

In addition, an AA-sized 1000-mAh nickel-hydrogen cell using the hydrogen-occlusion alloy electrode which had been given the anodic oxidation treatment according to the invention was prepared and tested to show that the rated capacity could be obtained by the first-cycle charge-discharge operation.

Further, the same favorable effect as above was obtained also in either case where an alloy of Zr-Ni system such as $ZrNi_{1.43}$, an alloy of Ti-Zr-Ni system or an alloy of La-Ni system such as $LaNi_5$ is used as the hydrogen-occlusion alloy.

Thus, according to the present invention, a hydrogen-occlusion alloy electrode is given an anodic oxidation treatment in an alkaline aqueous solution, prior to being given an initial activation treatment, so that the said electrode requires fewer charge discharge cycles required for the initial activation thereof, and as a result, the time for manufacturing the hydrogen-occlusion alloy electrode can be shortened. This constitutes an industrially valuable improvement.

## Claims

1. A manufacturing method of a hydrogen-occlusion alloy electrode characterized in that a hydrogen-occlusion alloy electrode is given an anodic oxidation treatment in an alkaline aqueous solution, and thereafter is applied to an initial activation treatment.

2. The method of claim 1, characterized in that the anodic oxidation treatment comprises an anodic oxidation potential of - 0.4 v (vs. Hg/HgO at 25°C) or less and a treatment time of at least 3 min.

3. The method of claim 2, characterized in potential the range of - 0.6 to - 0.4 V with an alloy of Zr-V-Ni system and of - 0.9 to - 0.7 V with an alloy of the Mm-Ni system.